# FASCICULE DE BREVET EUROPEEN

(11) **EP 0 871 012 B1**
(45) Date de publication et mention de la délivrance du brevet: **19.03.2003**
(21) Numéro de dépôt: 98400835.9
(22) Date de dépôt: 07.04.1998
(51) Int. Cl.: G01D 5/20, G01D 5/22

(54) **Capteur inductif micro-usiné, notamment du dèplacement d un objet**
Durch Mikromaterialbearbeitung hergestellter induktiver Sensor
Micro-machined inductive sensor

(30) Priorité: 07.04.1997 FR 9704218
(43) Date de publication de la demande: 14.10.1998
(73) Titulaire: CSEM Centre Suisse d'Electronique et de Microtechnique SA - Recherche et Développement, 2007 Neuchâtel (CH)
(72) Inventeur: De Coulon, Yves, 2075 Thielle-Wavre (CH); Chevroulet, Michel Alain, 2000 Neuchatel (CH)
(74) Mandataire: Caron, Gérard

(56) Documents cités:
- EP-A- 0 552 001
- EP-A- 0 745 858
- US-A- 5 205 171
- PATENT ABSTRACTS OF JAPAN vol. 096, no. 004, 30 avril 1996 & JP 07 325137 A (TOKYO GAS CO LTD), 12 décembre 1995,

## Description

La présente invention est relative à un capteur inductif micro-usiné permettant, sans contact et par l'intermédiaire d'un champ magnétique rayonné, de détecter la position et/ou le mouvement d'un objet susceptible de modifier ce champ magnétique.

Plus particulièrement, l'invention concerne un capteur de ce type comportant au moins une bobine inductrice primaire et au moins une bobine détectrice secondaire de conception planaire; ce terme signifiant que l'épaisseur de l'enroulement des bobines présente une valeur nettement plus faible que les autres dimensions des bobines et que les bobines sont disposées sur un support plan.

Les capteurs comportant des bobines planaires ont l'avantage de pouvoir être fabriqués par des techniques analogues à celles employées habituellement pour la fabrication des circuits intégrés avec lesquels ils peuvent d'ailleurs avantageusement être associés sur une même plaquette de silicium, le circuit intégré étant alors notamment formé par les circuits de traitement du signal de mesure fourni par le capteur.

Un tel capteur a été décrit dans une demande de brevet déposée en Suisse le 29 avril 1996 au nom du Demandeur et ayant pour titre: "Dispositif de détection de position et de mouvement à variation de champ magnétique" (voir aussi EP-A-0 805 339).

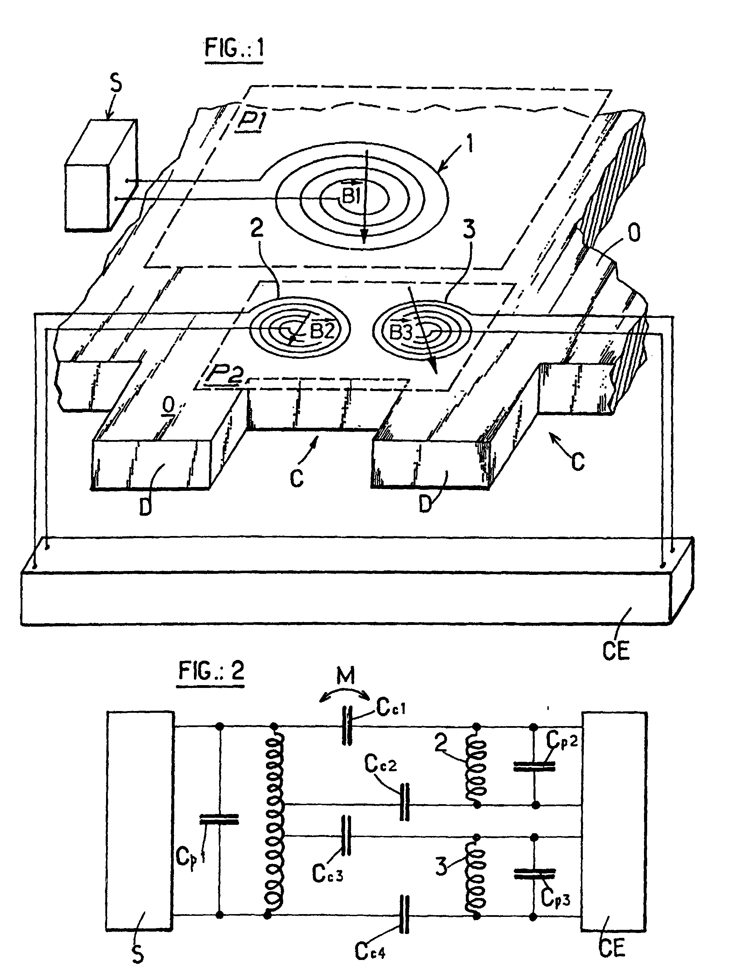

La figure 1 des dessins annexés représente à titre de rappel un schéma très simplifié en perspective d'un capteur selon cette demande de brevet. Il comporte une bobine planaire émettrice 1 enroulée en spirale qui est connectée à une source de tension alternative S envoyant dans cette bobine un courant, la bobine 1 étant ainsi émettrice d'un flux magnétique inducteur B1 perpendiculairement au plan P1 de la bobine 1.

Le capteur comprend également deux bobines planaires réceptrices 2 et 3 également enroulées en spirale et placées dans un plan P2 dans le capteur par rapport à la bobine émettrice 1 de telle manière qu'elles reçoivent toutes deux une part déterminée du flux magnétique B1 engendré par la bobine émettrice 1. Ces parts de flux magnétique sont désignées respectivement par B2 et B3 sur la figure 1.

Les bobines réceptrices 2 et 3 sont connectées à un circuit d'exploitation CE chargé de traiter, de préférence de manière différentielle, les signaux de mesure obtenus par l'intermédiaire des deux bobines réceptrices. On trouvera une description détaillée de ce circuit dans la demande de brevet précitée.

Le capteur est capable de détecter la position et/ou le mouvement d'un objet O qui, en raison de sa structure et du matériau dont il est constitué, est capable de modifier les conditions d'induction de flux dans les deux bobines réceptrices 2 et 3. L'objet O présente à cet effet une discontinuité de structure, répétitive ou non, qui en défilant devant le capteur permet d'obtenir les modifications des conditions d'induction. Dans l'exemple représenté de la figure 1, cette discontinuité de structure est formée par une série de dents D et de créneaux C successifs prévus sur le bord de l'objet O. Dans l'exemple représenté, le plan général de l'objet O est parallèle aux plans des bobines 1 et 2 et on peut supposer que l'objet O soit une roue dentée par exemple, entraînée en rotation autour d'un axe qui est orienté parallèlement aux axes des bobines 1 à 3. Toutefois, les attitudes mutuelles du capteur et de l'objet O ne sont pas déterminantes pourvu que la discontinuité de structure de l'objet O puisse modifier lesdites conditions d'induction ce qui, en simplifiant, sera le cas si une certaine distance entre le capteur et l'objet O est respectée pour une intensité donnée du courant inducteur.

Comme le courant d'induction est de forme alternative par exemple un courant sinusoïdal de fréquence déterminée, des tensions alternatives sont induites dans les bobines réceptrices 2 et 3. Ces tensions auront des amplitudes déterminées par les positions relatives du capteur et de l'objet; les amplitudes seront constantes si l'objet O n'est pas en mouvement. Cependant, si cet objet O se déplace, par exemple en étant animé d'un mouvement de rotation autour de son axe, les tensions induites seront modulées par le passage devant le capteur de la discontinuité de structure de l'objet, modulation qui peut être exploitée dans le circuit CE de manière à extraire des signaux d'information de mouvement de l'objet O. On conçoit que les signaux des différentes bobines réceptrices, lesquelles sont décalées par rapport à une discontinuité donnée, peuvent servir à tout instant à déterminer la vitesse, la distance, l'accélération ou la décélération, la direction du mouvement ou encore la position de l'objet O.

Comme ce capteur fonctionne par couplage inductif, on peut l'assimiler à un transformateur dont la bobine émettrice 1 est le primaire et dont les bobines réceptrices 2 et 3 sont les secondaires. Dans l'exemple antérieur décrit ci-dessus, ce transformateur ne comporte pas d'élément de guidage de flux. Toutefois, un tel élément peut être prévu par exemple sous la forme d'une couche de matériau ferromagnétique pouvant être disposée par-dessus les bobines 1 et 3, par exemple.

Ce capteur "transformateur" peut travailler avec des objets O réalisés en un matériau magnétique ou, également, en un matériau non magnétique mais conducteur de l'électricité dans lequel le champ magnétique de la bobine émettrice 1 pourra engendrer des courants de Foucault perturbant à leur tour les flux magnétiques des bobines réceptrices 2 et 3, perturbations qui font finalement conduire à l'obtention du signal utile dans le circuit d'exploitation CE.

Le développement du capteur ainsi conçu par le Demandeur a mené à la constatation que les bobines sont couplées entre elles non seulement magnétiquement, mais également capacitivement. Ceci n'est pas surprenant en soi, car on rencontre dans tout système formé de bobines couplées magnétiquement des phénomènes de couplage capacitif. Seulement, ces phénomènes sont peu gênants pour des systèmes de capteur de taille macroscopique où l'influence des capacités parasites sur le signal utile n'excède guère 1%, en général.

En revanche, dans les capteurs dont il est question ici et qui ont une taille microscopique (l'ensemble de bobines décrit ci-dessus peut avoir des dimensions hors tout de l'ordre de quelques millimètres seulement), les capacités parasites peuvent engendrer des influences parasites dont l'ampleur peut aller jusqu'à 100% du signal utile, si l'on prend en considération également le fait que la fréquence de travail du capteur est relativement élevée (de l'ordre du MHz, par exemple).

La figure 2 des dessins annexés montre un schéma simplifié équivalent du capteur qui vient d'être décrit, le couplage magnétique étant symbolisé par la double flèche M.

Ce schéma fait apparaître que chaque bobine 1, 2 et 3 est en fait associée à une capacité parasite parallèle respectivement Cp1 à Cp3. Ces capacités ont, certes, une influence gênante, mais elles peuvent être compensées ou du moins être prises en compte dans la source de courant S, d'une part, et dans le circuit d'exploitation CE, d'autre part. Cependant, il s'avère que d'autres capacités parasites agissent sur le comportement du capteur. En effet, les bobines 1 à 3 sont couplées entre elles non seulement magnétiquement, mais également capacitivement, ce que la figure 2 symbolise par les capacités Cc1 à Cc4, raccordant chaque extrémité d'une bobine réceptrice à la bobine émettrice, comme représenté.

Contrairement aux capacités parallèles Cp1 à Cp3, les capacités de couplage Cc1 à Cc4 entre les bobines 1 à 3 ne sont en général pas égales et ne peuvent être compensées ou éliminées électroniquement qu'avec des moyens dont la complexité anéantirait quasiment les avantages de simplicité de construction que l'on peut atteindre avec le capteur décrit ci-dessus. D'autre part, ces capacités parasites de couplage influent défavorablement sur le résultat de la mesure que l'on peut espérer obtenir avec le capteur. Tout d'abord, elles contribuent aux signaux fournis par les bobines réceptrices 2 et 3 par des composantes qui sont en opposition de phase avec ces signaux utiles de sorte que ces composantes risquent d'annuler complètement les signaux utiles dans les bobines 2 et 3. Si par ailleurs, ce qui est pratiquement toujours le cas quel que soit le soin apporté à la fabrication, les capacités parasites ne sont pas égales pour les deux bobines réceptrices, elles détruisent l'effet différentiel que les bobines ont sur le signal de mesure.

L'invention a pour but de fournir un capteur du type que l'on vient de décrire, mais dans lequel l'influence du couplage capacitif entre les bobines émettrice et réceptrices est complètement éliminée.

L'invention a donc pour objet un capteur inductif micro-usiné permettant, sans contact et par l'intermédiaire d'un champ magnétique alternatif rayonné, de détecter la position et/ou le mouvement d'un objet susceptible de modifier ce champ magnétique et comprenant à cet effet au moins une discontinuité, ce capteur comportant au moins une bobine émettrice planaire pour émettre ledit champ magnétique alternatif et au moins une bobine réceptrice planaire placée de manière à capter une part déterminée dudit champ et les variations de cette part magnétique captée dues à la discontinuité dudit objet, lesdites bobines étant disposées sur un substrat commun et obtenues par des opérations de photolithographie sélective, caractérisé en ce qu'au moins dans les zones du substrat dans lesquelles ladite bobine réceptrice est contiguë à ladite bobine réceptrice, il est prévu au moins une plage de blindage galvaniquement indépendante desdites bobines et connectée à un potentiel de référence, ladite plage de blindage étant formée par une couche de métallisation déposée sur ledit substrat.

Il résulte de ces caractéristiques que toutes les capacités susceptibles de coupler les bobines les unes aux autres sont dérivées vers un potentiel de référence tel que la masse, de sorte qu'elles ne peuvent plus influencer le signal de mesure produit par le capteur.

D'autres caractéristiques et avantages de l'invention apparaîtront au cours de la description qui va suivre, donnée uniquement à titre d'exemple et faite en se référant aux dessins annexés sur lesquels:
- la figure 1 déjà décrite montre schématiquement la construction d'un capteur de position et/ou de mouvement conforme à une réalisation antérieure du Demandeur;
- la figure 2, également déjà décrite, est un schéma équivalent simplifié du capteur de la figure 1;
- la figure 3 est une vue en plan d'une puce semiconductrice sur laquelle est agencé un capteur de position et/ou de mouvement selon un premier mode de réalisation de l'invention;
- la figure 4 est une vue partielle agrandie en coupe de ce capteur, la vue étant prise selon la ligne de coupe partielle IV-IV de la figure 3;
- la figure 5 est une vue schématique en perspective du capteur selon l'invention pour illustrer une disposition préférentielle des bobines réceptrices par rapport à un objet et à la discontinuité que ce dernier présente;
- la figure 6 montre un schéma équivalent simplifié du capteur selon le mode de réalisation des figures 3 à 5;
- la figure 7 est une vue en plan d'un capteur conçu suivant un deuxième mode de réalisation de l'invention;
- la figure 8 est une vue en coupe du capteur de la figure 7, prise selon la ligne de coupe VIII-VIII de la figure 7; et
- les figures 9 à 11 montrent par des vues en plan d'autres configurations possibles du capteur selon l'invention.

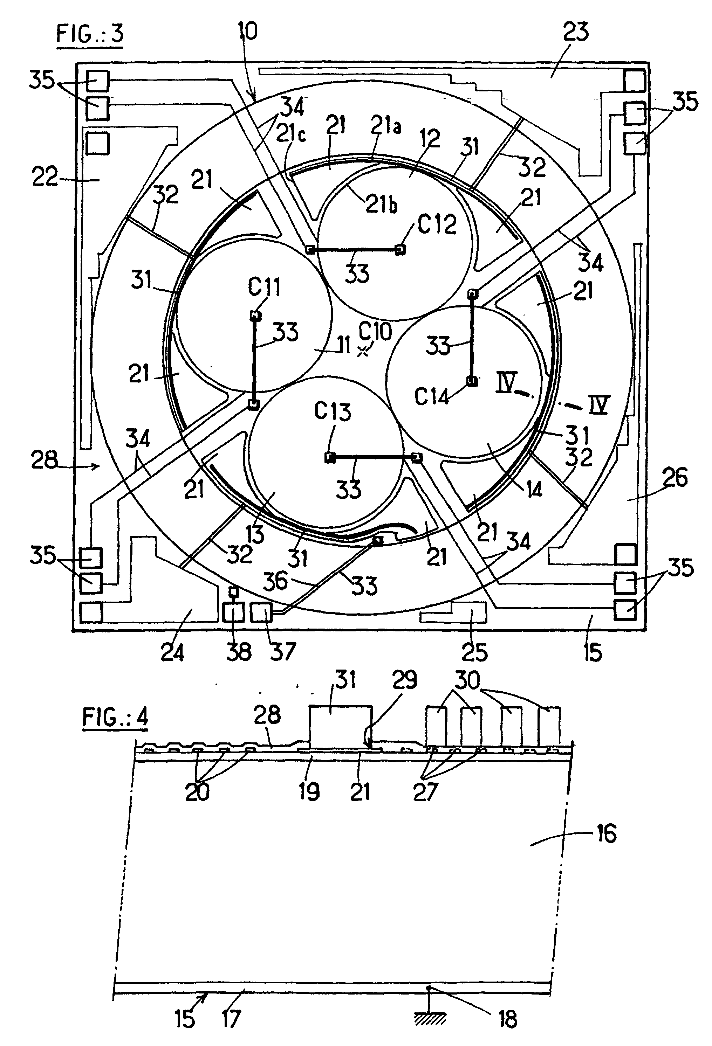

Les figures 3 à 6 illustrent un premier mode de réalisation selon l'invention dans lequel le capteur comprend, à titre d'exemple, une bobine planaire émettrice 10 et quatre bobines planaires réceptrices 11 à 14, qu'il est possible de combiner pour effectuer des mesures différentielles. Cependant, l'invention s'applique également à des configurations de capteurs comportant seulement deux ou trois bobines réceptrices, voire plus de quatre bobines réceptrices. Le nombre de bobines réceptrices utilisées détermine la résolution du capteur.

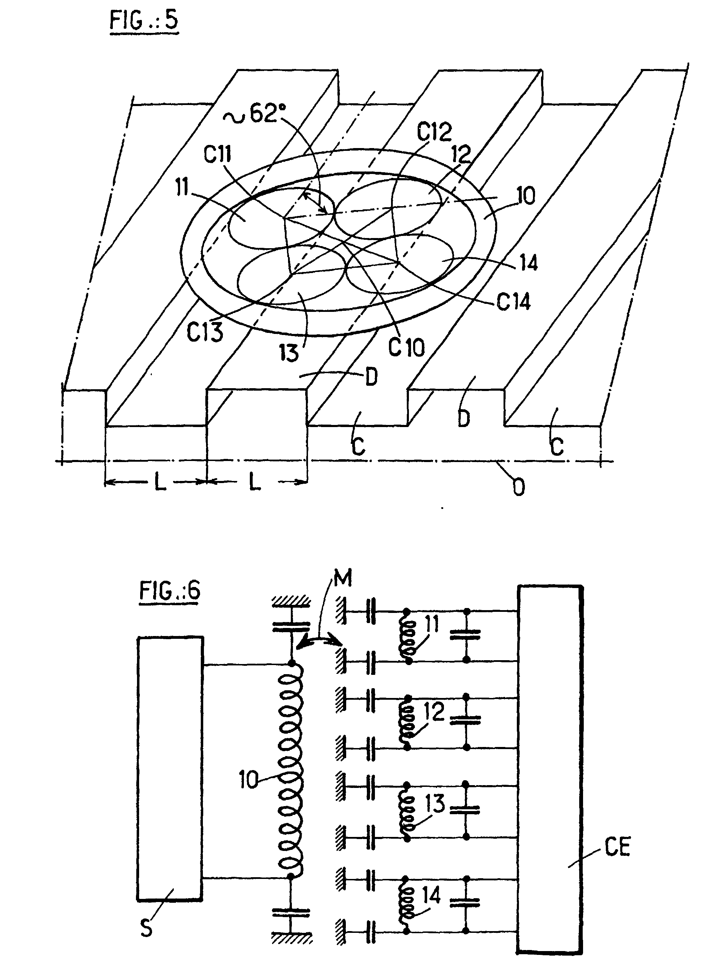

Dans le mode de réalisation représenté, il est avantageux que, en vue d'obtenir un couplage magnétique aussi favorable que possible, les centres C11 à C14 des bobines réceptrices soient situés aux quatre sommets d'un carré et que la bobine émettrice 10 entoure ces bobines réceptrices 11 à 14, son centre C10 étant en coïncidence avec le point d'intersection des diagonales de ce carré (voir notamment la figure 5).

Pour fixer les idées, la plaquette 15 sur laquelle est disposé le capteur peut être de forme carrée et présenter un côté de 4 mm de longueur.

La plaquette 15 est formée d'un substrat 16, dans lequel peut être réalisé un circuit exécutant les fonctions de l'un ou de l'autre des blocs S et CE de la figure 6, soit des deux blocs à la fois. L'une des faces (ici la face inférieure) de la plaquette 15 est revêtue d'une couche conductrice 17, en aluminium notamment, pour servir de plan de masse du capteur connecté également au substrat. A cet effet, cette couche 17 est pourvue d'une borne de connexion symbolisée en 18 sur la figure 4. La face opposée du substrat 16 est revêtue d'une couche isolante 19 en oxyde de silicium, par exemple.

Sur la couche d'oxyde 19 est déposée sélectivement par des techniques classiques de photolithographie une première couche de métallisation, en aluminium par exemple, cette couche ayant plusieurs rôles.

Tout d'abord, cette première couche est configurée pour former les bobines réceptrices 11 à 14. Chacune d'elles se présente en spirale avec un nombre de spires tel que la bobine puisse capter un maximum d'énergie magnétique de la part de la bobine émettrice 10. La vue en coupe de la figure 4 montre seulement quelques-unes de ces spires désignées par 20 pour ce qui concerne la bobine réceptrice 14.

Selon une caractéristique essentielle de l'invention, la première couche de métallisation constitue également une pluralité de plages de blindage 21 destinées plus particulièrement à assurer le découplage capacitif de la bobine émettrice 10 vis-à-vis des bobines réceptrices 11 à 14. Dans le mode de réalisation représenté, ces plages de blindage 21 constituent des segments métalliques galvaniquement séparés des bobines et ayant chacun un bord extérieur 21a suivant le profil intérieur de la bobine émettrice 10, un bord intérieur 21b suivant le profil intérieur de la bobine réceptrice 11 à 14 associée et un bord latéral 21c qui s'étend à peu près radialement. Ainsi, à chaque bobine réceptrice 11 à 14 sont associées deux plages de blindage 21.

La première couche de métallisation constitue encore d'autres plages telles que 22 à 26 disposées à l'extérieur de la bobine émettrice 10 et formant également des blindages pour cette dernière. Avantageusement, la première couche de métallisation peut se prolonger sous la bobine émettrice 10, ce qui sur la figure 4 est symbolisé par de petits rectangles 27 sous la bobine émettrice 10, bien que la couche métallique puisse être continue dans cette zone.

Les plages de blindage 21 à 26 sont destinées à être connectées à un potentiel de référence, avantageusement la masse. Elles sont donc connectées de préférence à la borne 18 (figure 4), par des moyens non représentés.

La première couche de métallisation est recouverte d'une couche d'isolation dite intermétallique 28 à l'exception de quelques zones arquées suivant le profil intérieur de la bobine émettrice 10 et se trouvant près du bord intérieur de celle-ci. Une telle zone est indiquée en 29 sur la figure 4.

Le capteur présente également une seconde couche de métallisation, réalisée de préférence en cuivre et déposée par photolithographie sélective classique sur la couche d'isolation intermétallique 28.

Cette seconde couche de métallisation constitue en premier lieu la bobine émettrice 10. On peut noter à titre indicatif seulement que chaque spire de la bobine émettrice 10 peut avoir une hauteur de 10µm, sa spirale ayant un pas de 8µm, par exemple. Sur la figure 4, quelques spires de la bobine 10 sont visibles et repérées par la référence 30. Une telle bobine émettrice peut absorber une puissance de 50 mW, par exemple.

La seconde couche de métallisation constitue également des éléments de blindage 31 en forme d'arcs conducteurs qui lors de la formation de cette couche viennent se superposer aux zones à découvert 29 dans la couche isolante 28. Ces arcs conducteurs ont de préférence une hauteur sensiblement égale à celle de la bobine émettrice 10 et ils contribuent également au découplage capacitif. En outre, ils sont respectivement en contact direct avec deux plages de blindage 21 adjacentes associées à chaque bobine réceptrice 11 à 14. Ces arcs conducteurs sont ainsi formés en même temps que les spires 30 de la bobine émettrice 10, leur hauteur valant également 10µm environ, dans le présent exemple.

La seconde couche de métallisation peut également comprendre des pistes de connexion telles que 32 reliant les plages 21 à l'intérieur de la bobine 10 à celles 23 à 26 à l'extérieur de celle-ci. D'autres pistes de connexion 33 sont prévues au niveau de la seconde couche de métallisation pour assurer la liaison électrique respective entre, d'une part, les centres C11 à C14 des bobines réceptrices 11 à 14 et des fils de connexion respectifs 34 menant à des bornes de contact 35 prévues sur le bord de la plaquette 15. Une piste analogue 36 est prévue pour relier la spire la plus intérieure de la bobine émettrice 10 à une borne de contact 37, la spire extérieure de cette bobine étant reliée directement à une autre borne de contact 38.

Le capteur peut être achevé par dépôt d'une couche de passivation et par une encapsulation (non représentées sur les figures).

La figure 5 illustre que la disposition géométrique des bobines réceptrices 11 à 14 choisie dans le mode de réalisation des figures 3 et 4 permet d'obtenir un positionnement efficace du capteur, à savoir un signal différentiel maximum et un déphasage de 90°, par rapport à un objet O dont la discontinuité est formée d'une succession régulière de dents D et de créneaux C de même largeur L. La denture ainsi formée de l'objet O peut avoir une forme générale rectiligne comme représentée, l'objet O pouvant être formé par une règle, par exemple s'étendant dans la même direction que la denture. Une série de trous peut également remplacer les dentures.

La denture peut également être courbe en étant prévue par exemple à la périphérie d'une roue, dont le plan général pourra être parallèle ou perpendiculaire à celui du capteur. Cependant, comme déjà indiqué, ni la forme, ni l'attitude dans l'espace de la discontinuité de l'objet par rapport au capteur ne sont critiques pourvu que la discontinuité de l'objet puisse modifier le champ magnétique engendré par la bobine émettrice 10.

Si les dispositions respectives du capteur et de l'objet O sont comme représentées sur la figure 5, ou alternativement telles que la dimension transversale de la denture soit perpendiculaire au plan général du capteur, et si en outre le capteur présente une configuration à quatre bobines réceptrices engendrant ainsi des signaux déphasés de 90° dans ces bobines, il est avantageux que le diamètre des bobines réceptrices soit égal au demi-pas de la denture de l'objet O, soit la largeur L.

En outre, un signal de mesure ayant un taux de modulation maximal sera obtenu si les droites reliant les centres C11, C12, resp. C13, C14 des bobines réceptrices 11, 12, resp. 13, 14 formant des paires différentielles sont inclinées d'environ 62° par rapport au plan défini par un flanc de la denture.

La figure 6 illustre par un schéma équivalent comment les éléments de blindage 21 et 31 permettent de découpler capacitivement les bobines les unes des autres vers la masse. Cette figure représente également schématiquement les blocs S et CE qui, comme déjà indiqué ci-dessus, peuvent, soit l'un ou l'autre, soit tous deux être réalisés dans le substrat 16. A propos du circuit d'exploitation CE, on peut noter qu'il peut être conçu pour, à partir des signaux délivrés par les bobines réceptrices, engendrer différents types d'informations telles que des informations de position, de proximité, de mouvement (vitesse, direction), de distance, etc. Il peut également être conçu pour engendrer des informations de forme concernant l'objet O qu'il pourra calculer à partir d'un relevé d'une pluralité de distances capteur/objet mesurées. A cet égard, on peut noter que la détermination d'une forme d'un objet sera d'autant plus précise que le nombre de bobines réceptrices utilisées sera plus grand, car ce nombre détermine la résolution du capteur.

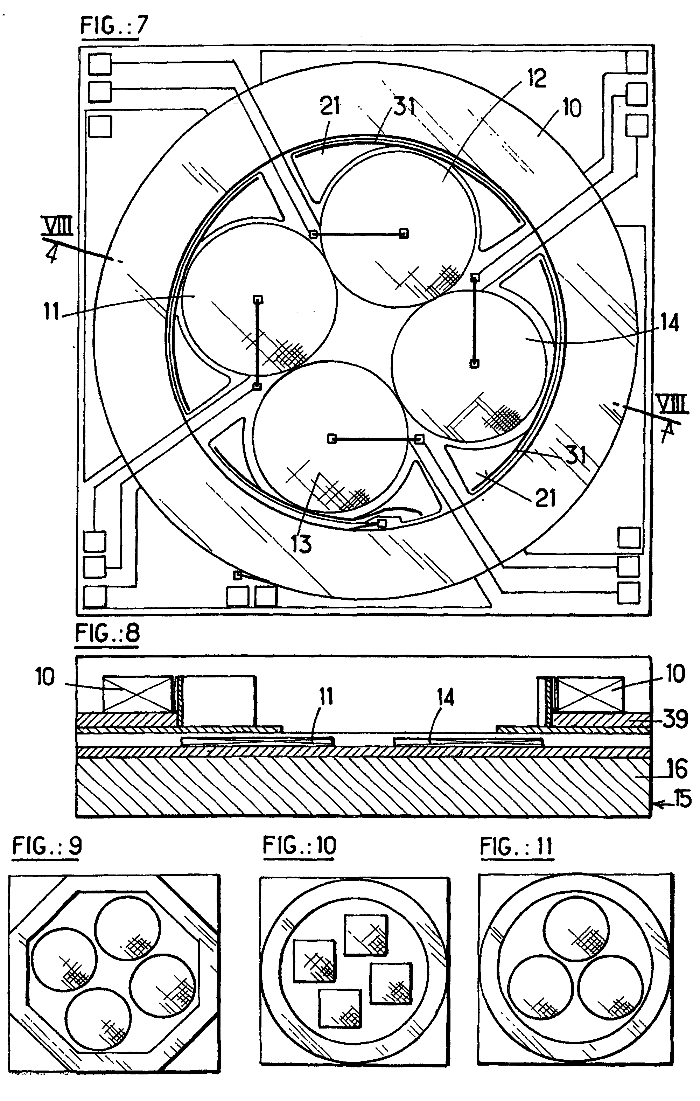

Les figures 7 et 8 montrent un autre mode de réalisation de l'invention dans lequel l'agencement général du capteur est conforme à celui des figures 3 à 6. Cependant, alors que dans ce dernier cas, le capteur est fabriqué moyennant deux niveaux de métallisation, l'un d'aluminium et l'autre de cuivre par exemple, dans le cas des figures 7 et 8, la fabrication est exécutée en trois étapes de métallisation, les bobines réceptrices étant obtenues moyennant un dépôt de métal distinct du dépôt de métal conduisant à la formation des plages de blindage 21. Par ailleurs, les figures 7 et 8 portent les mêmes références que celles utilisées dans les figures 3 à 6 pour désigner des éléments équivalents.

On notera également dans ces figures que la couche de métallisation servant à constituer les plages de blindage se prolonge sous la bobine émettrice 10 en étant d'un seul tenant avec les plages de blindage extérieures. En outre on notera que la bobine émettrice 10 est séparée de la couche de métallisation de blindage par une couche isolante 39.

Les figures 9 à 11 montrent d'autres configurations possibles du capteur selon l'invention. Plus précisément sur la figure 9, le capteur comprend une bobine émettrice qui au lieu d'être de forme générale circulaire, est octogonale.

Sur la figure 10, la bobine émettrice est circulaire, tandis que les bobines réceptrices ont une forme carrée.

Enfin, sur la figure 11, le capteur ne comporte que trois bobines réceptrices, toutes les bobines ayant ici une forme circulaire.

Il est évident que dans le cadre de l'invention, d'autres configurations du capteur sont possibles tant sur le plan des formes des bobines que celle des plages de blindage qui doivent chaque fois être adaptées à celle des bobines.

## Revendications

1. Capteur inductif micro-usiné permettant, sans contact et par l'intermédiaire d'un champ magnétique alternatif rayonné, de détecter la position et/ou le mouvement d'un objet (0) susceptible de modifier ce champ magnétique et comprenant à cet effet au moins une discontinuité (D, C), ce capteur comportant au moins une bobine émettrice planaire (10) pour émettre ledit champ magnétique alternatif et au moins une bobine réceptrice planaire (11 à 14) placée de manière à capter une part déterminée dudit champ et les variations de cette part magnétique captée dues à la discontinuité dudit objet (0), lesdites bobines étant disposées sur un substrat commun (16) et obtenues par des opérations de photolithographie sélective, **caractérisé en ce qu'**au moins dans les zones du substrat (16) dans lesquelles ladite bobine émettrice (10) est contiguë à ladite bobine réceptrice (11 à 14), il est prévu au moins une plage de blindage (21) galvaniquement indépendante desdites bobines (10 à 14) et connectée à un potentiel de référence (18), ladite plage de blindage (21) étant formée par une couche de métallisation déposée sur ledit substrat (16).

2. Capteur suivant la revendication 1, **caractérisé en ce que** ladite bobine réceptrice (11 à 14) est réalisée dans la même couche de métallisation que ladite plage de blindage (21 à 26).

3. Capteur suivant la revendication 1, **caractérisé en ce que** ladite bobine réceptrice (11 à 14) est réalisée dans une couche de métallisation sous-jacente à la couche de métallisation dans laquelle est formée ladite plage de blindage (21 à 26).

4. Capteur suivant l'une quelconque des revendications 1 à 3, **caractérisé en ce que** ladite plage de blindage (21 à 26) se prolonge sous ladite bobine émettrice (10).

5. Capteur suivant l'une quelconque des revendications précédentes, **caractérisé en ce que**, dans ladite zone contiguë, il est prévu un élément de blindage (31) superposé à ladite plage de blindage (21) et s'étendant à partir de celle-ci sur une hauteur sensiblement égale à celle de ladite bobine émettrice (10), tout en étant en contact électrique avec ladite plage de blindage.

6. Capteur suivant l'une quelconque des revendications précédentes, **caractérisé en ce que** ladite bobine réceptrice (11 à 14) est placée à l'intérieur du périmètre défini par ladite bobine émettrice (10).

7. Capteur suivant la revendication 6, **caractérisé en ce qu'**il est prévu au moins deux bobines réceptrices (11, 12; 13 14) formant une paire différentielle.

8. Capteur suivant la revendication 7, **caractérisé en ce qu'**il est prévu quatre bobines réceptrices (11 à 14) formant deux paires différentielles et disposées symétriquement autour de l'axe (C10) de ladite bobine émettrice (10).

9. Capteur suivant la revendication 8, **caractérisé en ce qu'**il est associé à un objet (O) dont la discontinuité est formée d'une succession de dents (D) alternant avec des créneaux (C), ayant une largeur (L) égale à celle des dents, **en ce que** lesdites bobines ont un diamètre égal à ladite largeur (L) et sont toutes contiguës entre elles, et **en ce qu'**une droite reliant les centres (C11 à C14) de deux bobines adjacentes est inclinée d'un angle de 62° environ avec le plan du flanc de l'une des dents (D).

10. Capteur suivant l'une quelconque des revendications 1 à 9, **caractérisé en ce qu'**il comprend également une source de tension alternative (S) connectée à ladite ou lesdites bobines émettrices (10) et réalisée de façon intégrée dans ledit substrat commun (16).

11. Capteur suivant l'une quelconque des revendications 1 à 10, **caractérisée en ce qu'**il comprend également un circuit d'exploitation (CE) agencé pour engendrer, à partir des signaux délivrés par lesdites bobines réceptrices, différentes informations relatives audit objet (O), telles que des informations de position, de proximité, de mouvement (vitesse, direction), de distance, et/ou de forme.

12. Capteur suivant la revendication 11, **caractérisé en ce que** ledit circuit d'exploitation (CE) est réalisé de façon intégrée dans ledit substrat commun (16).

## Claims

1. A micromachined inductive sensor for detecting, without contact and through the intermediary of a radiated alternating magnetic field, the position and/or the movement of an object (O) capable of modifying said magnetic field and including for this purpose at least one discontinuity (D, C), said sensor comprising at least one planar transmitter coil (10) for transmitting said alternating magnetic field and at least one planar receiver coil (11-14) located so as to sense a determined portion of said field and the variations of said magnetic portion sensed due to the discontinuity of said object (10), said coils being disposed on a common substrate (16) and obtained by selective photolithography operations, **characterised in that** at least in the areas of the substrate (16) in which said transmitter coil (10) is contiguous with said receiver coil (11-14), there is provided at least one shielding band (21) galvanically independent of said coils (10-14) and connected to a reference potential (18), said shielding band (21) being formed from a metallization layer deposited on said substrate (16).

2. A sensor as claimed in claim 1, **characterised in that** said receiver coil (11-14) is implemented in the same metallization layer as said shielding band (21-26).

3. A sensor as claimed in claim 1, **characterised in that** said receiver coil (11-14) is implemented in a metallization layer underlying the metallization layer in which said shielding band (21-26) is formed.

4. A sensor as claimed in any one of the preceding claims, **characterised in that** said shielding band (21-26) extends beneath said transmitter coil (10).

5. A sensor as claimed in any one of the preceding claims, **characterised in that** there is in said contiguous area a shielding element (31) overlaid on said shielding band (21) and extending from said shielding band over a height substantially equal to that of said transmitter coil (10), while remaining in electrical contact with said shielding band.

6. A sensor as claimed in any one of the preceding claims, **characterised in that** said receiver coil (11-14) is located inside the perimeter defined by said transmitter coil (10).

7. A sensor as claimed in claim 6, **characterised in that** there are at least two receiver coils (11, 12; 13, 14) forming a differential pair.

8. A sensor as claimed in claim 7, **characterised in that** there are four receiver coils (11-14) forming two differential pairs disposed symmetrically around the axis (C10) of said transmitter coil (10).

9. A sensor as claimed in claim 8, **characterised in that** said sensor is associated with an object (O) the discontinuity of which is formed from a succession of teeth (D) alternating with notches (C) having a width (L) equal to that of the teeth, **in that** said coils have a diameter equal to said width (L) and are all contiguous with each other, and **in that** a straight line linking the centers (C11-C14) of two adjacent coils is inclined at an angle of approximately 62° to the plane of the side of one of said teeth (D).

10. A sensor as claimed in anyone of claims 1- 9, **characterised in that** said sensor also includes an alternating voltage source (S) connected to said transmitter coil or coils (10) and implemented in an integrated manner in said common substrate (16).

11. A sensor as claimed in any one of claims 1-10, **characterised in that** said sensor also includes an operating circuit (CE) adapted to generate, from signals delivered by said receiver coils, different information relating to said object (O), such as position, proximity, movement (speed, direction), distance and/or shape information.

12. A sensor as claimed in claim 11, **characterised in that** said operating circuit (CE) is implemented in an integrated manner in said common substrate (16).

## Patentansprüche

1. Durch Mikrobearbeitung hergestellter induktiver Sensor, der kontaktfrei und über ein ausgestrahltes magnetisches Wechselfeld eine Detektion der Position und/oder Bewegung eines Gegenstandes (O) erlaubt, der in der Lage ist, dieses magnetische Feld zu modifizieren, und zu diesem Zweck mindestens eine Diskontinuität (D, C) aufweist, wobei der Sensor mindestens eine planare Sendespule (10) zum Ausstrahlen des magnetischen Wechselfeldes und mindestens eine planare Empfangsspule (11 - 14) umfasst, die so angeordnet ist, dass sie einen vorgegebenen Teil des Feldes und die durch die Diskontinuität des Gegenstandes (O) hervorgerufenen Änderungen dieses magnetischen Teils auffängt, wobei die Spulen auf einem gemeinsamen Substrat (16) angeordnet und durch ausgewählte photolithographische Bearbeitungsvorgänge hergestellt sind, **dadurch gekennzeichnet, dass** zumindest in denjenigen Bereichen des Substrates (16), in denen die Sendespule (10) benachbart zu der Empfangsspule (11 - 14) ist, mindestens ein Abschirmbereich (21) vorgesehen ist, der von den Spulen (10 - 14) galvanisch unabhängig und mit einem Referenzpotential (18) verbunden ist, wobei der Abschirmbereich (21) von einer auf dem Substrat (16) abgelagerten Metallisierungsschicht gebildet wird.

2. Sensor nach Anspruch 1, **dadurch gekennzeichnet, dass** die Empfangsspule (11 - 14) in der gleichen Metallisierungsschicht wie der Abschirmbereich (21 - 26) gebildet ist.

3. Sensor nach Anspruch 1, **dadurch gekennzeichnet, dass** die Empfangsspule (11 - 14) in einer Metallisierungsschicht gebildet ist, die unter der Metallisierungsschicht liegt, in der der Abschirmbereich (21 - 26) gebildet ist.

4. Sensor nach einem der Ansprüche 1 bis 3, **dadurch gekennzeichnet, dass** der Abschirmbereich (21 - 26) unter die Sendespule (10) verlängert ist.

5. Sensor nach einem der vorhergehenden Ansprüche, **dadurch gekennzeichnet, dass** in dem benachbarten Bereich ein Abschirmelement (31) vorgesehen ist, das über dem Abschirmbereich (21) angeordnet ist und sich ausgehend von diesem auf eine Höhe erstreckt, die im wesentlichen gleich der der Sendespule (10) ist, wobei es in elektrischem Kontakt mit dem Abschirmbereich steht.

6. Sensor nach einem der vorhergehenden Ansprüche, **dadurch gekennzeichnet, dass** die Empfangsspule (11 - 14) innerhalb des von der Sendespule (10) definierten Umfangs angeordnet ist.

7. Sensor nach Anspruch 6, **dadurch gekennzeichnet, dass** mindestens zwei Empfangsspulen (11, 12; 13, 14) vorgesehen sind, die ein Differentialpaar bilden.

8. Sensor nach Anspruch 7, **dadurch gekennzeichnet, dass** vier Empfangsspulen (11 - 14) vorgesehen sind, die zwei Differentialpaare bilden und symmetrisch um die Achse (C10) der Sendespule (10) angeordnet sind.

9. Sensor nach Anspruch 8, **dadurch gekennzeichnet, dass** er einem Gegenstand (O) zugeordnet ist, dessen Diskontinuität von einer Abfolge von Zähnen (D) gebildet wird, die sich mit Zwischenräumen (C) abwechseln, deren Breite (L) gleich der der Zähne ist, dass die Spulen einen Durchmesser haben, der gleich der besagten Breite (L) ist, und sämtlich benachbart zueinander sind, und dass eine Gerade, die die Mittelpunkte (C11 - C14) zweier benachbarter Spulen verbindet, um einen Winkel von ungefähr 62° zu der Ebene der Flanke eines der Zähne (D) geneigt ist.

10. Sensor nach einem der Ansprüche 1 bis 9, **dadurch gekennzeichnet, dass** er ferner eine Wechselspannungsquelle (S) aufweist, die mit der oder den Sendespulen (10) verbunden und in das gemeinsame Substrat (16) integriert ist.

11. Sensor nach einem der Ansprüche 1 bis 10, **dadurch gekennzeichnet, dass** er ferner eine Auswerteschaltung (CE) aufweist, die so ausgebildet ist, dass sie ausgehend von Signalen, die von den Empfangsspulen abgegeben werden, unterschiedliche Informationen bezüglich des Gegenstandes (O) wie Informationen hinsichtlich Position, Nähe, Bewegung (Geschwindigkeit, Richtung), Abstand und/oder Form erzeugt.

12. Sensor nach Anspruch 11, **dadurch gekennzeichnet, dass** die Auswerteschaltung (CE) so ausgebildet ist, dass sie in das gemeinsame Substrat (16) integriert ist.
